# EUROPÄISCHE PATENTSCHRIFT

(11) **EP 1 665 289 B1**
(45) Veröffentlichungstag und Bekanntmachung des Hinweises auf die Patenterteilung: **11.02.2009**
(21) Anmeldenummer: 04761886.3
(22) Anmeldetag: 30.08.2004
(51) Int. Cl.: G21F 9/10

(54) **VERFAHREN ZUR REGENERATION VON DEKONTAMINATIONSMITTELN**
METHOD FOR REGENERATING DECONTAMINATION AGENTS
PROCEDE DE REGENERATION D'AGENTS DE DECONTAMINATION

(30) Priorität: 08.09.2003 CH 15332003
(43) Veröffentlichungstag der Anmeldung: 07.06.2006
(73) Patentinhaber: Deco-Hanulik AG, 8049 Zürich (CH)
(72) Erfinder: HANULIK, Jozef, CH-8049 Zürich (CH)
(74) Vertreter: Schneider Feldmann AG Patent- und Markenanwälte
(86) Internationale Anmeldenummer: PCT/CH2004/000546
(87) Internationale Veröffentlichungsnummer: WO 2005/024847

(56) Entgegenhaltungen:
- US-A- 3 853 980
- PATENT ABSTRACTS OF JAPAN Bd. 1999, Nr. 13, 30. November 1999 (1999-11-30) & JP 11 237495 A (SHINKO PANTEC CO LTD; KOBE STEEL LTD), 31. August 1999 (1999-08-31)
- PATENT ABSTRACTS OF JAPAN Bd. 1997, Nr. 02, 28. Februar 1997 (1997-02-28) & JP 8 271692 A (TOSHIBA CORP), 18. Oktober 1996 (1996-10-18)
- PATENT ABSTRACTS OF JAPAN Bd. 0020, Nr. 83 (M-026), 6. Juli 1978 (1978-07-06) & JP 53 051400 A (HITACHI LTD), 10. Mai 1978 (1978-05-10)
- PATENT ABSTRACTS OF JAPAN Bd. 0020, Nr. 09 (M-003), 23. Januar 1978 (1978-01-23) & JP 52 119799 A (HITACHI LTD), 7. Oktober 1977 (1977-10-07)

## Beschreibung

Die vorliegende Erfindung betrifft ein Verfahren zur Regeneration von Dekontaminationsmitteln und anderen radioaktiv kontaminierten Flüssigkeiten als Ausgangsprodukt, welche eine Anfangssäure beliebiger Konzentration enthalten, sowie eine beliebige Zusammensetzung darin gelöster radioaktiv kontaminierter Stoffe, insbesondere Metalle.

Weltweit lagern riesige Mengen von radioaktiv kontaminierten Flüssigkeiten, die beispielsweise von Kernkraftwerken oder von Dekontaminationsprozessen herrühren. Diese Flüssigkeiten, die hier als Ausgangsprodukt bezeichnet werden, enthalten unterschiedliche Anfangssäuren beliebiger Konzentration. Diese Ausgangsprodukte sind mit verschiedenen, darin gelösten radioaktiv kontaminierten Stoffen belastet. Insbesondere enthalten solche Ausgangsprodukte darin gelöste Metalle. Die Entsorgung dieser Ausgangsprodukte ist bis heute teuer und oftmals kaum gelöst.

So wird beispielsweise aus der Säure bisher mit elektrolytischen Verfahren metallisches Eisen ausgesondert, welches unter anderem das Kobalt 60-Isotop (Co-60) enthält.

Hierzu wird beispielsweise auf das Dokument "Dekontamination von radioaktiv kontaminierten Oberflächen", J. Hanulik, Diss. ETH Nr. 9460 verwiesen.

Die Verfestigung des metallischen Eisens in Zement ist jedoch für die Endlagerung bedenklich. Bei einem eventuellen Wassereinbruch in ein solches Endlager würde das im Zement gebundene metallische Eisen oxidieren. Da das Oxidvolumen ein mehrfach grösseres Volumen aufweist als das Eisenvolumen entstehen dadurch enorme Drücke in der Zementmatrix, die zu einer Sprengung der Zementblöcke führen, womit das radioaktive Inventar aus dem Endlager freigesetzt wird.

Auch die Reinigung von radioaktiv kontaminierten Säuren mittels Ionentauscher ist ausgesprochen problematisch. Die hierbei verwendeten Ionenharze sind ausgesprochen teuer. Hinzu kommt, dass die Menge der mittels Ionentauscher am Ionenharz zu bindenden Metalle relativ gering ist. Entsprechend entstehen bei diesem Verfahren sehr grosse Mengen an sekundären Abfällen. Erfahrungsgemäss lassen sich mit dieser Methode kaum mehr als 10 g kontaminiertes Eisen in einem Liter Zement binden. Auch die Entsorgung der Ionenharze aus den Ionentauschern ist sehr komplex. Die direkte Verfestigung dieser Ionenharze in Zement ist nur schlecht möglich, da sie sich nur sehr schlecht mit Zement binden und ebenfalls bei einem Wassereinbruch zu extrem starker Quellung führen und damit zur Zerstörung der Zementmatrix, womit wiederum das radioaktive Inventar aus dem Endlager freigesetzt werden würde. Auch die Verbrennung der Ionenharze ist heute problematisch. Erst ein in neuerer Zeit bekannt gewordenes Verfahren, bei dem die Ionenharze pyrolisiert werden bei hohen Temperaturen erbringt ein befriedigendes Resultat. Das dabei volumenmässig stark reduzierte Pyrolyseprodukt kann anschliessend verfestigt werden. Die Kosten dieses Verfahrens sind zudem hoch.

Heute bekannte Verfahren zur Regeneration und Aufarbeitung kontaminierter Säuren sind immer nur für eine spezielle Säure ausgelegt. Hinzu kommt, dass bei den heutigen Verfahren die Rückgewinnung der Säuren kaum berücksichtigt wird. Auch werden mit solchen Verfahren vielfach grosse Mengen an Sekundärabfällen produziert. Entsprechend wird die Entsorgungsproblematik eher zum Endlager verschoben als gelöst.

Es ist folglich die Aufgabe der vorliegenden Erfindung ein Verfahren zu schaffen, welches die vorgenannten Nachteile eliminiert. Es ist ferner die Aufgabe der vorliegenden Erfindung, die bei der Dekontamination verwendeten Säuren wiederzugewinnen, aufzukonzentrieren und aktivitätsfrei zu erhalten. Es ist eine weitere Aufgabe der vorliegenden Erfindung einen Prozess zu schaffen, der für beinahe alle üblicherweise bei der Dekontamination verwendeten Säuren anwendbar ist. Aber auch für besonders geeignete Dekontaminationssäuren, welche auch schon heute regenerierbar sind, wird mit dem hier offenbarten Verfahren ein vorteilhaftes, die sekundäre Abfallmenge reduzierendes Verfahren angeboten. Insbesondere soll das erfindungsgemässe Verfahren anwendbar sein auf die zur Dekontamination wegen ihrer hohen Wirkung bekannten, jedoch kaum als entsorgbar geltenden Säuren anzuwenden, wie beispielsweise die Mischungen von HNO₃/HF oder die H₃PO₄, oder die HCl etc. Dank dem erfindungsgemässen Verfahren zur Regeneration dieser Dekontaminationsmittel lassen sich diese heute kaum noch verwendeten Säuren mit hoher Dekontaminationswirkung und grosser Wirtschaftlichkeit wieder verwenden. Es ist ferner eine Aufgabe der vorliegenden Erfindung ein Verfahren zu schaffen, bei dem als Sekundärabfälle vorwiegend kontaminierte Metallhydroxide anfallen, die gut und in hoher Konzentration zu Ferro-Zement mit guten Eluat-Qualitäten verfestigt werden können.

Es ist des Weiteren eine Aufgabe der vorliegenden Erfindung, die beim Regenerationsverfahren verwendeten Chemikalien in geschlossenen Kreisläufen wieder zu verwenden.

Diese vielfältigen Aufgaben löst ein erfindungsgemässes Verfahren mit den Merkmalen des Patentanspruches 1. Weitere vorteilhafte Ausführungsformen des Verfahrens gehen aus den abhängigen Ansprüchen hervor.

An Hand der anliegenden Zeichnung wird in der nachfolgenden Beschreibung das erfindungsgemässe Verfahren erläutert. Es zeigt:
- Figur 1: ein Ablaufschema des erfindungsgemässen Verfahrens in genereller Anwendung und
- Figur 2: das Verfahren am Beispiel der HBF₄-Säure als Dekontaminationsmittel.

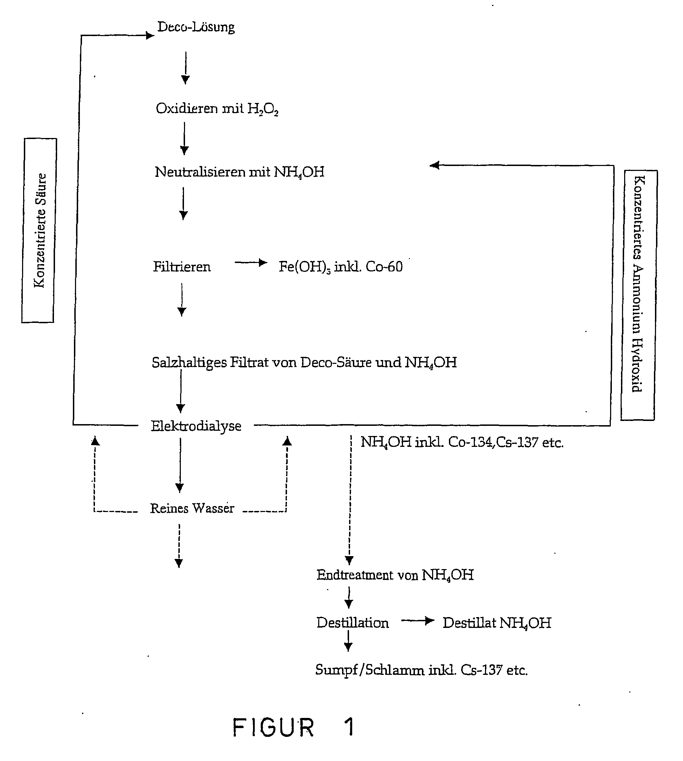

Im Verfahren, welches nachfolgend zuerst mit Bezug auf die Figur 1 beschrieben wird, herrschen üblicherweise Raumtemperaturen. Gewisse Reaktionen laufen zwar exotherm ab, doch ist die dabei auftretende Erwärmung relativ gering, so dass immer Temperaturen von unter 100°C vorliegen. Entsprechend wird in der Beschreibung des Verfahrens kein Hinweis auf Temperaturführungen vorgenommen.

Ausgegangen wird folglich von einem Dekontaminationsmittel, dessen Zusammensetzung bekannt ist und als Ausgangsprodukt eine Flüssigkeit darstellt, die radioaktiv kontaminiert ist und eine Anfangssäure beliebiger Konzentration enthält. Dieses Dekontaminationsmittel, in der Zeichnung kurz als Deko-Lösung bezeichnet, kann nachfolgend in der Gesamtheit oder chargenweise dekontaminiert, regeneriert und aufbereitet werden. Das Verfahren eignet sich allerdings auch für eine quasi-kontinuierliche Durchführung. Nachfolgend wird jedoch nur die chargenweise Durchführung des Verfahrens beschrieben. In einem ersten Schritt wird einer Charge von Deko-Lösung ein Oxydationsmittel zugeführt. Bevorzugterweise wird hierzu Wasserstoffsuperoxyd verwendet, da hierdurch im Verlauf des weiteren Prozesses keine zusätzlichen Sekundärabfälle entstehen, sondern lediglich Prozesswasser, das entsprechend wiederverwendet werden kann. Hierauf wird nachfolgend noch eingegangen. Bei der Dekontamination befinden sich in der Dekontaminationslösung Eisenionen Fe²+. Mittels Wasserstoffsuperoxyd (H₂O₂) oxidieren die Fe²+ Ionen zu Fe³+ Ionen.

Der nun vorliegenden Lösung wird erfindungsgemäß zur Neutralisation Ammoniumhydroxid (NH₄OH) zugefügt oder alternativ und gleichwertig das gasförmige Ammoniak (NH₃) eingeleitet. In beiden Fällen wird hierdurch eine Fällung erreicht, bei der entsprechende Hydroxide in der Lösung sich bilden, die einen deutlich sichtbaren Niederschlag ergeben. Diese Feststoffe sedimentieren nach kurzer Zeit. Insbesondere entsteht hierbei das Eisenhydroxid (Fe(OH)₃), mit dem auch das Co-60-Isotop mitgefällt wird. Auch die weiteren eventuell vorhandenen Schwermetalle bilden entsprechende Hydroxide. Um somit die Deko-Lösung von der radioaktiven Belastung zu befreien werden die Feststoffe von der flüssigen Phase getrennt. Die hierzu erforderlichen Trennverfahren sind einfach und preiswert durchführbar und bekannt. Insbesondere kommen hierzu einfachste Filter in Frage. Die Trennung kann jedoch auch durch Sedimentation oder mittels Zentrifugen erfolgen. Die abgetrennten Feststoffe, insbesondere die Metallhydroxide lassen sich ausgezeichnet in Zement verfestigen. Der hierbei entstehende Ferrozement erträgt auch ohne Veränderung einen eventuellen Wassereinbruch. Die Zementmatrix ist folglich für die Endlagerung geeignet und zugelassen.

Prinzipiell Kämen für die Neutralisation verschiedene Laugen in Frage, wie das Kaliumhydroxid (KOH) und das Natriumhydroxid (NaOH), jedoch lassen sich diese Fällungsmittel kaum destillieren. Zur Entsorgung der Cs-Typus Isotopen wird man die Kalium- und Natriumhydroxide mehrmals rezyklieren und danach das radioaktiv angereicherte Fällungsmittel gesamthaft entsorgen.

In der verbleibenden flüssigen Phase sind die Ammoniumsalze der Anfangssäuren inklusive Cs-Typus-Kationen in gelöster Form enthalten. Diese flüssige Phase wird nun einer Elektrodialyse zugeführt. Durch die Elektrodialyse erfolgt die Salzspaltung und die Auftrennung in Ammoniumhydroxid einerseits und der Anfangssäure des Ausgangsproduktes andererseits. Bei der erwähnten Aufspaltung erfolgt auch eine Aufkonzentrierung der Säure. Es verbleibt somit kationen- und anionenfreies Wasser. Die wieder erhaltene Anfangssäure ist frei von radioaktiven Belastungen. Das sich ebenfalls wieder bildende Ammoniumhydroxid (NH₄OH) ist ebenfalls in konzentrierter Form vorliegend und enthält lediglich Spuren von gewissen Isotopen vom Typus Cs. Das Ammoniumhydroxid kann trotz dieser geringfügigen Belastung wieder rückgeführt werden in den Dekontaminationsprozess und für eine weitere Charge von Dekontaminationsmitteln, die regeneriert werden müssen, verwendet werden. Erst nach mehrfacher Verwendung wird die Konzentration der genannten Isotope so hoch sein, dass man sinnvollerweise auch das Ammoniumhydroxid einer Endbehandlung zuführt. Bei dieser Endbehandlung wird das Ammoniumhydroxid destilliert. Das hierbei entstehende Destillat ist praktisch aktivitätsfrei. Entsprechend kann dieses wiederum dem Verfahren zugeführt werden. Ein verbleibender Rest bildet sich in Form eines Sumpfes oder Schlammes, und dieser Sumpf oder Schlamm enthält die radioaktive Belastung durch die erwähnten Isotope Co-134 und Cs-137 sowie weiteren Isotopen. Dieser Sumpf oder Schlamm, dessen Menge gegenüber der kontaminierten Metallhydroxidfraktion kaum relevant ist, lässt sich ebenfalls verfestigen und in eine Zementmatrix einbringen.

Das hier beschriebene Verfahren lässt sich praktisch auf alle in der Dekontaminationstechnik eingesetzten Säuren anwenden. Insbesondere trifft dies zu auf die Gruppe der Säuren HBF₄, HF, HNO₃, H₂SO₄, H₃PO₄ und die organischen Säuren. Bei den organischen Säuren haben sich in der Dekontaminationstechnik insbesondere die Oxal-, Zitronen-, Essig- und Ameisensäure durchgesetzt. Alle genannten Säuren lassen sich mit dem erfindungsgemässen Verfahren ohne Einschränkung regenerieren. Ohne den Ablauf des Verfahrens zu ändern, lassen sich alle vorgenannten Säuren auf die beschriebene Weise regenerieren. Dies trifft sogar auf Mischungen dieser Säuren zu.

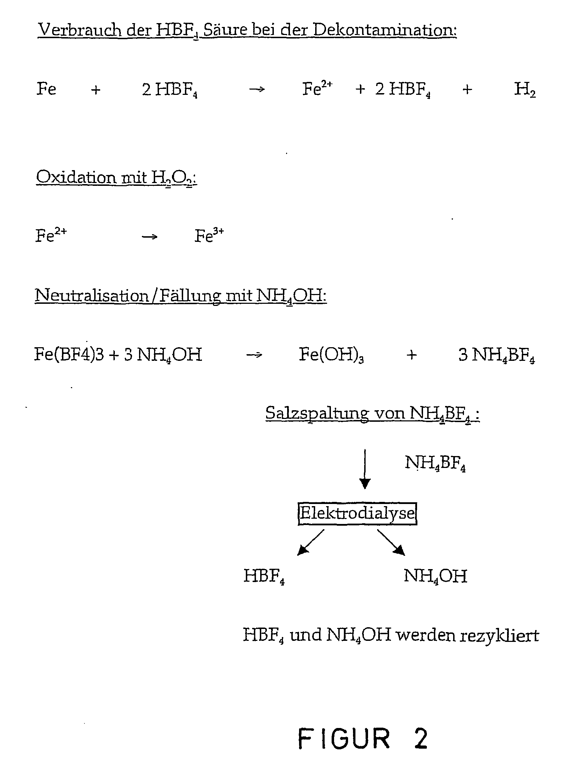

In der Figur 2 ist das Verfahren nochmals dargestellt im Anwendungsbeispiel bei der Verwendung der Fluoroborsäure (HBF₄), die besonders gute Dekontaminationseigenschaften besitzt. Wird Eisen von der Fluoroborsäure attackiert, so bilden sich die zweiwertigen Eisenionen Fe²+, während gleichzeitig Wasserstoff freigesetzt wird.

In der nachfolgenden Oxydation wird dieses zweiwertige Eisen Fe²+ in dreiwertiges Eisen Fe³+ aufoxidiert. Diese dreiwertigen in der Lösung befindlichen Eisenionen führen bei der nachfolgenden Neutralisation unter Beifügung von Ammoniumhydroxid (NH₄OH) zur nachfolgenden Reaktion Fe(BF₄)₃ + 3NH₄OH → Fe(OH)₃ + 3NH₄BF₄.

Bei dieser erwähnten Neutralisation bilden sich somit die erwähnten Metallhydroxide der Schwermetalle, und in der flüssigen Phase verbleibt das Ammoniumsalz, nämlich NH₄BF₄. Wie bereits weiter oben beschrieben werden nun durch entsprechende Filtration die Metallhydroxide von der flüssigen Phase getrennt. Diese radioaktiv belasteten Metallhydroxide werden in eine entsprechende Zementmatrix eingebunden und anschliessend der Endlagerung zugeführt.

Erfahrungsgemäss soll die Neutralisation in einem Milieu von 3-14 pH durchgeführt werden, bevorzugterweise jedoch in einem Bereich von 8-11 pH. Gewisse Metallhydroxide sind in einem sauren Milieu löslich, wobei die Löslichkeit mit tieferen pH-Werten zunimmt. Ist die Löslichkeit zu hoch, ist die Regeneration unvollständig. Daher sind aus praktischen Gründen die Grenzen zwischen 3 und 14 pH anzusetzen, wobei optimal im Bereich zwischen 8 und 11 pH gearbeitet wird, da hier das Nutzen/Kosten-Verhältnis am günstigsten ist.

Das in der flüssigen Phase verbleibende gelöste Salz (NH₄BF₄) wird einer Elektrodialyse zugeführt, wobei wiederum die anfängliche Fluoroborsäure (HBF₄) einerseits und das Ammoniumhydroxid (NH₄OH) andererseits wiedergewonnen und beide Anteile in das Verfahren beziehungsweise den Prozess zurückgeführt werden. So gelangt die Fluoroborsäure (HBF₄) wieder in den Dekontaminationsprozess und das Ammoniumhydroxid (NH₄OH) wird dem Regenerationsverfahren wieder zugeführt.

Selbstverständlich ist es nicht erforderlich, dass die nach der Elektrodialyse aktivitätsfreie Säure wiederum zu Dekontaminationsverwendung eingesetzt wird, sondern diese kann selbstverständlich auch in den freien Handel zurückgelangen. Es ist jedoch vielfach von Vorteil und erspart unnötige Zertifizierungsprozesse, wenn dieselbe Säure nach der Elektrodialyse direkt wieder zur Dekontamination eingesetzt wird und folglich das entsprechende Gelände überhaupt nicht verlassen muss. Dasselbe trifft selbstverständlich auch auf das Ammoniumhydroxid zu, das sinnvollerweise ebenfalls in einem geschlossenen Kreislauf geführt werden kann. Selbstverständlich wäre es auch möglich, das radioaktiv befreite Ammoniumhydroxid wieder in den freien Handel zu bringen.

Das nach der Elektrodialyse anliegende Wasser ist aktivitätsfrei und kann eine geringfügige Salzkonzentration von ca. 0,1 g/l haben. In dieser Konzentration darf es in einen Vorfluter eingeleitet werden. Im vorliegenden Fall wird jedoch empfohlen, das Wasser bei der Dekontamination wieder zu verwenden und insbesondere die Säure in ihrer Konzentration auf das gewünschte Mass zu verdünnen. Das Wasser kann jedoch auch durch eine Reverse Osmose geführt werden, wobei 99,9 % reines Wasser verbleibt und lediglich 0,1 % eines Konzentrates, das nun wiederum in die Dialyse zurückgeführt werden kann. Das so gereinigte Wasser hat Trinkwasserqualität.

Ein weiterer Vorteil der erfindungsgemässen Lösung besteht darin, dass das Verfahren mit einem ausserordentlich geringen chemischen, analytischen und apparativen Aufwand durchführbar ist. Das zu regenerierende Dekontaminationsmittel kann bei chargenweiser Durchführung des Verfahrens in ein einfaches Bad gegeben werden, und hierin kann auch die Oxydation sowie die nachfolgende Neutralisation mit Ammoniumhydroxid erfolgen. Bei der Verwendung von Ammoniak wird man vorzugsweise einen geschlossenen Reaktionsbehälter einsetzen. Der nach der Fällung sich bildende Niederschlag kann, wie bereits erwähnt, mit preiswerten auf dem Markt erhältlichen Filtern ausgefiltert werden. Wie bereits erwähnt besteht eine Vielfalt von Durchführungsmöglichkeiten zur Filtrierung. Insbesondere sei hier auf Filterpapiere, Filterpatronen und Filterpressen hingewiesen. In dieser Technologie bestehen entsprechend grosse Erfahrungen. Der nach der Filtration verbleibende Filterkuchen lässt sich waschen. Der Filterkuchen enthält neben Eisenhydroxid (Fe(OH)₃) weitere Hydroxide von Schwermetallen, wie Aluminium, Kupfer etc. Der Fällungsdekontaminationsfaktor der verschiedenen radioaktiven Substanzen liegt bei Co-60 zwischen 10 und 1000, für Uran (U), für Thorium (Th) und für Plutonium (Pu) im Bereich von 10 bis 100 oder auch höher, während der Fällungsdekontaminationsfaktor für Cäsium (Cs) zwischen 1 und 2 liegt. All diese Substanzen mit Ausnahme von Isotopen des Typus Cs verbleiben im Filterkuchen.

Der die Geschwindigkeit des Verfahrens limitierende Anteil liegt bei der Elektrodialyse. Mit kleinen Laborapparaten, die eine Leistung von 0,25 mol/h erreichen, kann die Salzspaltung ohne weiteres durchgeführt werden. Solche Laborapparate sind auf dem Markt für rund € 5000 erhältlich. Da das Gerät praktisch keine Überwachung und Bedienung erfordert, kann kontinuierlich 24 Stunden pro Tag gearbeitet werden, so dass bereits kleine bis mittlere Regenerationschargen mit solchen Laborapparaten durchführbar sind. Grössere Elektrodialysegeräte mit einem Durchsatz von rund 100 mol/h sind auf dem Markt für rund € 50'000 erhältlich. Für sehr grosse Regenerationsaufgaben sind auch grossindustrielle Anlagen, die bei der Natriumchloridspaltung eingesetzt werden, bekannt. Auch solche grossindustriellen Anlagen sind preislich vergleichbar mit den bekannteren Elektrolyseprozessanlagen.

Für die Endbehandlung des verbrauchten und radioaktiv belasteten Ammoniumhydroxids kann zum Beispiel mit bekannten Rotationsverdampfern gearbeitet werden. Bei Unterdruck lassen sich diese Verfahren bei Temperaturen von unter 100° C durchführen, und es werden dabei hohe Dekontaminationsfaktoren der Cs-Isotopen erzielt (über 1000).

Wie bereits erwähnt lassen sich für grosse Dekontaminationsaufgaben mit entsprechend grossem Volumen von zu regenerierenden Dekontaminationsmittelmengen auch bekannte grossindustrielle Anlagen bauen. Hierbei kann entsprechend statt einer chargenweisen Durchführung auch eine kontinuierliche Regeneration stattfinden, die beispielsweise in einem Rohrreaktor erfolgen kann. Dies bedingt dann entsprechend einen grösseren regeltechnischen Aufwand, bis die Verfahren automatisch und kontinuierlich laufen.

## Patentansprüche

1. Verfahren zur Regeneration von Dekontaminationsmitteln und anderen radioaktiv kontaminierten Flüssigkeiten als Ausgangsprodukt, welche mindestens eine Anfangssäure beliebiger Konzentration enthalten, sowie eine beliebige Zusammensetzung darin gelöster radioaktiv kontaminierter Stoffe, insbesondere Metalle, **dadurch gekennzeichnet, dass**
a) das Ausgangsprodukt oxydiert wird und danach
b) eine Neutralisation durch Zugabe von Ammoniumhydroxid (NH₄OH) oder durch Einleitung von Ammoniak (NH₃) durchgeführt wird, die zu einer Fällung führt, worauf
c) die Feststoffe abgetrennt werden von der flüssigen Phase und die Feststoffe als radioaktiver Abfall entsorgt werden, während
d) das gelöste Salz in der flüssigen Phase durch eine Elektrodialyse in Ammoniumhydroxid und die mindestens eine Anfangssäure des Ausgangsproduktes gespalten wird,
und wobei das verwendete Ammoniumhydroxid auf seine radioaktive Belastung überwacht und nach Erreichung eines festgelegten Grenzwertes destilliert wird, wobei das Destillat dem Regenerationsverfahren wieder rückgeführt wird, während der verbleibende Sumpf bzw. Schlamm radioaktiver Abfall entsorgt wird.

2. Verfahren nach Anspruch 1, **dadurch gekennzeichnet, dass** als Oxydationsmittel Wasserstoffsuperoxid (H₂O₂) verwendet wird.

3. Verfahren nach Anspruch 1, **dadurch gekennzeichnet, dass** das Ausgangsprodukt eine Säure aus der Gruppe HF, HBF₄, HCl, HNO₃, H₂SO₄, H₃PO₄ oder eine organische Säure enthält.

4. Verfahren nach Anspruch 3, **dadurch gekennzeichnet, dass** als organische Säure eine Säure aus der Gruppe Oxal-, Zitronen-, Essig- oder Ameisensäure verwendet wird.

5. Verfahren nach Anspruch 1, **dadurch gekennzeichnet, dass** nach der Elektrodialyse die regenerierte Säure aufkonzentriert wird.

6. Verfahren nach Anspruch 1, **dadurch gekennzeichnet, dass** die Neutralisation so durchgeführt wird, dass sich ein pH-Wert zwischen 3 und 14 pH, vorzugsweise jedoch zwischen 8 und 11 pH einstellt.

7. Verfahren nach Anspruch 1, **dadurch gekennzeichnet, dass** vorgängig der Eisengehalt in der kontaminierten Flüssigkeit festgestellt und danach die Oxydation durchgeführt wird.

8. Verfahren nach Anspruch 1, **dadurch gekennzeichnet, dass** das Verfahren zur Regeneration von Dekontaminationsmitteln in einem Dekontaminationsprozess zur Dekontamination radioaktiver Oberflächen in geschlossenen Kreisläufen gefahren wird, womit nach der Elektrodialyse die Anfangssäure wieder in den Dekontaminationsprozess zurückgeführt wird, nachdem zuvor das bei der Elektrodialyse anfallende Wasser zur Verdünnung des Dekontaminationsmittels auf die Gebrauchskonzentration verwendet worden ist, während das bei der Elektrodialyse rückgewonnene Ammoniumhydroxid wiederum im Regenerationsverfahren zur Neutralisation der wiederbenutzten Säure verwendet wird.

## Claims

1. A method for regeneration of decontamination agents and other radioactively contaminated liquids as the starting product containing at least one starting acid of any concentration as well as any composition of radioactively contaminated substances dissolved therein, in particular metals, **characterized in that**
a) the starting product is oxidized and then
b) a neutralization is performed by adding ammonium hydroxide (NH₄OH) or by introducing ammonia (NH₃), leading to precipitation, whereupon
c) the solids are separated from the liquid phase and the solids are sent for disposal as radioactive waste, while
d) the dissolved salt in the liquid phase is split by electrodialysis into ammonium hydroxide and the at least one initial acid of the starting product,
and whereby the ammonium hydroxide used is monitored for its radioactive burden, and after reaching a fixed limit value it is distilled, whereupon the distillate is recycled back to the regeneration process while the remaining sump and/or sludge of radioactive waste is sent for disposal.

2. The method according to Claim 1, **characterized in that** hydrogen peroxide (H₂O₂) is used as the oxidizing agent.

3. The method according to Claim 1, **characterized in that** the starting product is an acid from the group comprising HF, HBF₄, HCl, HNO₃, H₂SO₄, H₃PO₄ or an organic acid.

4. The method according to Claim 3, **characterized in that** an acid from the group comprising oxalic acid, citric acid, acetic acid or formic acid is used as the organic acid.

5. The method according to Claim 1, **characterized in that** after electrodialysis the regenerated acid is concentrated.

6. The method according to Claim 1, **characterized in that** the neutralization is performed in such a way that a pH between pH 3 and pH 14 is obtained, but preferably between pH 8 and pH 11.

7. The method according to Claim 1, **characterized in that** mainly the iron content in the contaminated liquid is detected and then the oxidation is performed.

8. The method according to Claim 1, **characterized in that** the method for regeneration of decontamination agents in a decontamination process for decontamination of radioactive surfaces is carried out in closed circuits, so that after electrodialysis, the starting acid is recycled back to the decontamination process after first the water formed by electrodialysis has been used for dilution of the decontamination agent to the use concentration, while the ammonium hydroxide recovered in electrodialysis is reused in the regeneration process for neutralization of the recycled acid.

## Revendications

1. Procédé de régénération de produits de décontamination et d'autres liquides contaminés par radioactivité sous forme de produit initial, qui contiennent au moins un acide initial ayant une concentration quelconque ainsi qu'une composition quelconque de substances contaminées par radioactivité dissoutes dedans, notamment des métaux, **caractérisé en ce que**
a) le produit initial est oxydé puis
b) il est pratiqué une neutralisation par ajout d'hydroxyde d'aluminium (NH₄OH) ou par introduction d'ammoniaque (NH₃) qui provoque une précipitation, sur quoi
c) les substances solides sont séparées de la phase liquide et les substances solides sont éliminées en tant que déchet radioactif, tandis que
d) le sel dissous dans la phase liquide est scindé par électrodialyse en hydroxyde d'aluminium et en l'au moins un acide initial du produit initial,
l'hydroxyde d'aluminium employé étant surveillé au niveau de sa charge radioactive et distillé une fois qu'une valeur limite fixée est atteinte, le distillat étant renvoyé vers le procédé de régénération, tandis que la vase ou la boue résiduelle est éliminée en tant que déchet radioactif.

2. Procédé selon la revendication 1, **caractérisé en ce qu'**on utilise comme agent d'oxydation du peroxyde d'hydrogène (H₂O₂).

3. Procédé selon la revendication 1, **caractérisé en ce que** le produit initial contient un acide du groupe HF, HBF₄, HCl, HNO₃, H₂SO₄, H₃PO₄ ou un acide organique.

4. Procédé selon la revendication 3, **caractérisé en ce qu'**on utilise comme acide organique un acide du groupe acide oxalique, citrique, acétique ou formique.

5. Procédé selon la revendication 1, **caractérisé en ce qu'**après l'électrodialyse, l'acide régénéré est concentré.

6. Procédé selon la revendication 1, **caractérisé en ce que** la neutralisation est réalisée de manière à ce qu'il s'établisse une valeur de pH comprise entre 3 et 14 pH, mais de préférence entre 8 et 11 pH.

7. Procédé selon la revendication 1, **caractérisé en ce que** la teneur en fer du liquide contaminé est préalablement déterminée et qu'ensuite l'oxydation est réalisée.

8. Procédé selon la revendication 1, **caractérisé en ce que** le procédé de régénération de produits de décontamination est réalisé dans un processus de décontamination pour la décontamination de surfaces radioactives dans des circuits fermés, processus par lequel l'acide initial est, après l'électrodialyse, renvoyé vers le processus de décontamination du fait que l'eau se formant lors de l'électrodialyse a préalablement été utilisée pour diluer le produit de décontamination, tandis que l'hydroxyde d'aluminium récupéré lors de l'électrodialyse est utilisé à nouveau dans le procédé de régénération pour la neutralisation des acides réutilisés.
